# EUROPEAN PATENT APPLICATION

(11) **EP 2 669 609 A2**
(43) Date of publication of application: **04.12.2013**
(21) Application number: 13170012.2
(22) Date of filing: 31.05.2013
(51) Int. Cl.: F25D 21/02, F25D 21/12, F25B 27/00, F25B 30/06

(54) **Defrost method for use in an air source heat pump system**

(30) Priority: 01.06.2012 GB 201209815
(71) Applicant: TEV Limited, Brighouse, Yorkshire HD6 1QF (GB)
(72) Inventor: Chisman, Christopher, Brighouse, Yorkshire HD6 1QF (GB)
(74) Representative: Jackson, Derek Charles

(57) **Abstract**

A solar air source heat pump system comprises a solar thermal system (21) including tubing providing a heat transfer fluid circuit (16), and an air source heat pump system (22) comprising tubing providing a refrigerant circuit (18), an evaporator (26) where the refrigerant is evaporated, and valves (4a, 4b) for isolating refrigerant in the evaporator. At least part of the tubing providing the heat transfer fluid circuit (16) is located within the evaporator (26). The system is defrosted by closing the valves (4a, 4b) to isolate the tubing providing the refrigerant circuit (18) in the evaporator (26), and passing hot heat transfer fluid through the part of the tubing providing the heat transfer fluid circuit (16) located within the evaporator (26) to melt frost in the evaporator.

## Description

This invention relates to a defrost method for use in an air source heat pump system. In particular, the invention relates to a method for defrosting an evaporator of an air source heat pump system

Current domestic hot water (DHW) systems and space heating (SH) systems utilise a variety of renewable energy technologies. For example, solar thermal collectors are mostly used for DHW purposes, but are sometimes also used for SH purposes. Air source heat pumps are mostly used for SH purposes.

A solar thermal collector can be in the form of a solar hot water panel designed to collect heat by absorbing sunlight. There are two types of solar thermal collectors: flat plate collectors and evacuated tube solar collectors.

Flat plate collectors consist of a dark flat-plate absorber of solar energy, a transparent cover such as glass that allows solar energy to pass through but reduces heat losses, a heat transfer fluid (HTF) such as water to remove heat from the absorber, and a heat insulating backing. Generally, the absorber consists of a thin absorber sheet of thermally stable polymers, aluminium, steel or copper, to which a matt black or selective coating is applied.

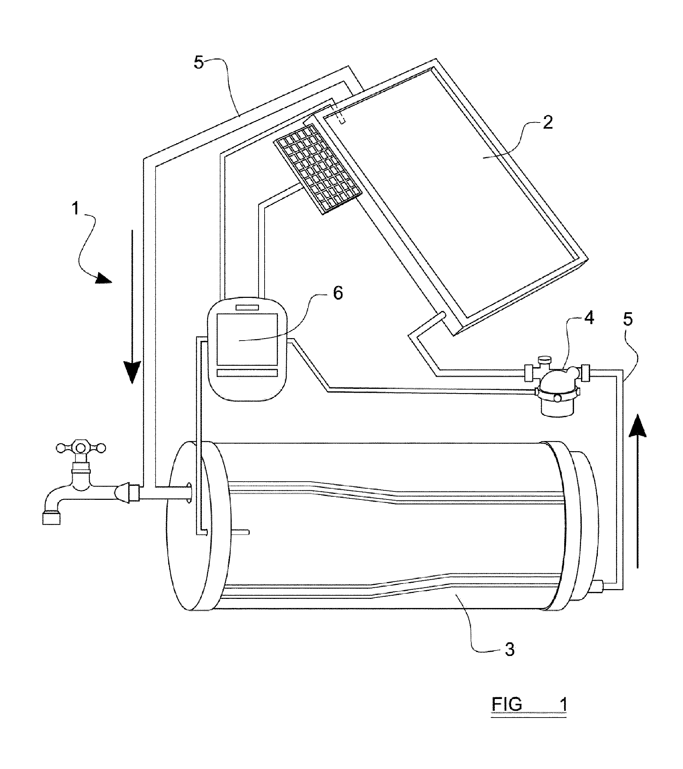

Figure 1 shows a known solar thermal system 1 comprising a flat plate collector 2. In such systems, a large storage tank 3 is ground- or floor-mounted and is below the level of the collector 2 and the HTF is usually circulated using a circulating pump 4 through tubing 5 to transfer heat from the absorber to the storage tank 3. Usually, an additional heat source such as an oil, gas or electric heater is also provided in the storage tank 3 for use, for example in winter, when there is not sufficient solar heat gain to deliver the required amount of hot water. Typically, a programmable differential controller 6 may be used to control the system.

An air source heat pump (ASHP) is a heating and cooling system that uses outside air as its heat source and heat sink. In accordance with the principles of vapor compression refrigeration, an ASHP uses a circulating liquid refrigerant as the medium which absorbs and removes heat from the space to be cooled and subsequently rejects that heat elsewhere. In domestic heating use, an ASHP absorbs heat from outside air and releases it inside during winter, and can often do the converse in summer.

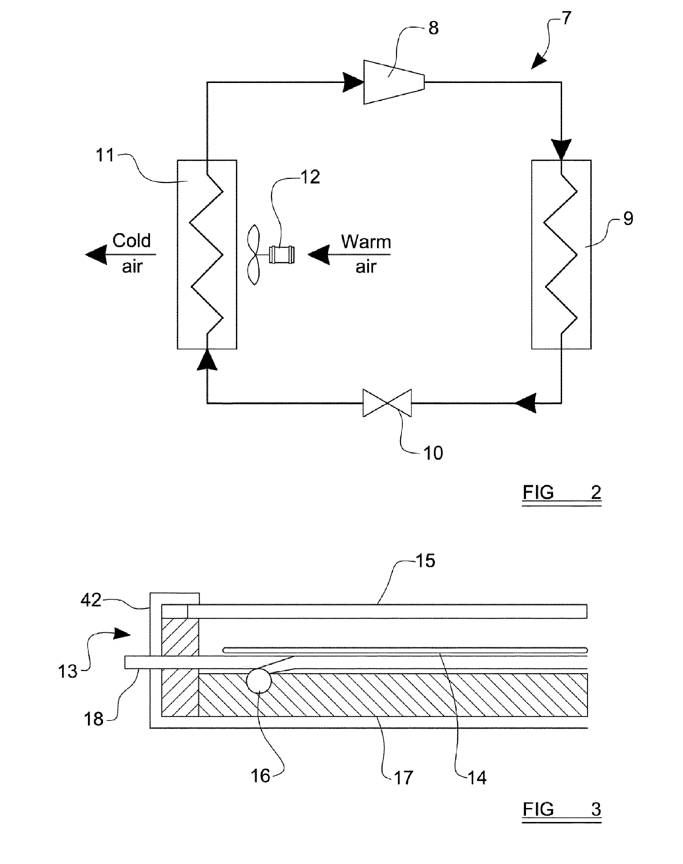

Figure 2 depicts a typical, single-stage vapor-compression system 7. Such systems typically have four components: a compressor 8, a condenser 9, an expansion device such as a thermal expansion valve (versions of which are called a throttle valve or Tx Valve or TxV) 10, and an evaporator 11.

Circulating refrigerant enters the compressor 8 as a saturated vapor and is compressed to a higher pressure and higher temperature. The hot, compressed vapor (superheated vapour) is routed through the condenser 9 where it is cooled and condensed into a liquid by passing through a coil or tubes with cool water or cool air flowing across the coil or tubes. This is where the circulating refrigerant rejects heat from the system and the rejected heat is carried away by either the water or the air, whichever is used.

The condensed liquid refrigerant, in the form of a saturated liquid, is next routed through an expansion valve 10 where it undergoes an abrupt reduction in pressure. That pressure reduction results in an adiabatic flash evaporation of a part of the liquid refrigerant. The auto-refrigeration effect of the adiabatic flash evaporation lowers the temperature of the liquid and vapor refrigerant mixture so that it is colder than the temperature of the enclosed space to be refrigerated.

The cold mixture is then routed through the coil or tubes in the evaporator 11. A fan 12 circulates the warm air in the enclosed space across the coil or tubes carrying the cold refrigerant liquid and vapor mixture. That warm air evaporates the liquid part of the cold refrigerant mixture. At the same time, the circulating air is cooled and thus lowers the temperature of the enclosed space to the desired temperature. The evaporator 11 is where the circulating refrigerant absorbs and removes heat which is subsequently rejected in the condenser 9 and transferred elsewhere by the water or air used in the condenser 9.

To complete the refrigeration cycle, the refrigerant vapor from the evaporator is again a saturated vapor and is routed back into the compressor 8.

Both solar thermal collector and ASHP systems can be used for the purposes of DHW and SH, even though solar thermal collectors are mostly used for DHW and ASHP systems are mostly used for SH. In any case, each system is always used as an independent system and even when they are both used they are always used as two entirely separate systems.

As separate systems, they both lack performance when they are needed most. Solar thermal collectors do not work well when there is no sun, but that is also mostly likely when hot water is needed most. ASHP systems do not work well when there is cold air, but that is also mostly likely when heating is most needed.

Furthermore, both systems are not standalone and they both require auxiliary heater such as an electric, oil or gas heater, depending on given climate scenarios in the relevant location.

Currently there are two methods to defrost an evaporator of an ASHP system: hot gas by-pass method and reverse cycle method. The hot gas by pass method periodically diverts hot discharge gas into the evaporator where ice is expected to build up, no matter whether or not ice is present. The reverse cycle approach is also invoked in a limited range of ambient temperatures, and tends to be initiated on a regular basis, for example every 30 minutes, and will run until the coil temperature rises, or until a certain time has passed. This often results in overshoot where a significant amount of the ice is taken through two phase changes, i.e. solid to liquid and liquid to gas, with the associated wasted energy of the second phase change i.e. the liquid to gas phase change.

Typically, current defrost systems use a set temperature to trigger a defrost routine and then set a fixed period before the next defrost can start. This will result in defrosts occurring when there is no need, i.e. low humidity situations and the like.

It is therefore an object of the present invention to provide a method for initiating a defrost action for an evaporator of an air source heat pump system which overcomes, or at least ameliorates, the above mentioned disadvantages.

According to one aspect of the present invention there is provided a method for defrosting an evaporator of a solar air source heat pump system comprising: a solar thermal system including tubing providing a heat transfer fluid circuit; and an air source heat pump system comprising tubing providing a refrigerant circuit, an evaporator where the refrigerant is evaporated, and valves for isolating refrigerant in the evaporator; wherein at least part of the tubing providing the heat transfer fluid circuit is located within the evaporator, the method comprising the steps of: closing the valves to isolate the tubing providing the refrigerant circuit in the evaporator; and passing hot heat transfer fluid through the part of the tubing providing the heat transfer fluid circuit located within the evaporator to melt frost in the evaporator.

Compared to existing defrost methods such as the hot gas by-pass method and the reverse cycle method, using thermal energy from the heat transfer fluid to defrost the evaporator uses less energy and thus is more efficient. Furthermore, the control of the defrost process using heat transfer fluid supplied through the tubing for a heat transfer fluid is much easier, suffering very little from overshoot. In addition, the thermal energy within the heat transfer fluid will have been derived from solar energy, or from only one vapour compression cycle.

The method may include the steps of: measuring the effectiveness of the evaporator; determining whether the effectiveness of the evaporator is lower than a pre-set threshold at the ambient temperature; and triggering a defrost action if the effectiveness of the evaporator is lower than the pre-set threshold.

This method ensures that a defrost routine is only triggered when required. Only through the measurement of the effectiveness of the evaporator can any system truly know whether defrosting is required.

The method may include detecting for a blockage of air flow through the evaporator, the method comprising the additional steps of: determining whether the effectiveness of the evaporator is lower than a pre-set threshold at an ambient temperature at which frost is not possible, or whether the effectiveness of the evaporator is lower than expected immediately after a defrost action is completed; and transmitting a signal indicating blockage to air flow in the evaporator if the effectiveness of the evaporator is lower than the pre-set threshold at the ambient temperature, or if the effectiveness of the evaporator is lower than expected immediately after a defrost action is completed.

Eliminating blockage ensures proper running of the system.

The step of measuring the effectiveness of the evaporator may comprise the steps of: measuring ambient temperature around the evaporator; measuring refrigerant temperature in the evaporator; calculating the temperature difference between the ambient temperature and the refrigerant temperature in the evaporator; and calculating the effectiveness of the evaporator using the temperature difference.

Calculating the effectiveness of the evaporator using the temperature difference between that of the air that crosses it and that of the refrigerant evaporation temperature is a simple and accurate way of measuring the effectiveness.

The method may further comprise the step of determining a threshold for the effectiveness of the evaporator at different ambient temperatures.

The step of determining a threshold for the effectiveness of the evaporator at different ambient temperatures may comprise the steps of: measuring the effectiveness of the evaporator at different ambient temperatures around the evaporator when there is no frost at the evaporator; and setting a threshold for the effectiveness of the evaporator indicating no frost at different ambient temperatures.

This step recognises the fact that the threshold for the effectiveness of the evaporator indicating no frost should be different at different ambient temperatures. This ensures an accurate and effective method for initiating a defrost action.

The method may include the steps of: measuring the refrigerant pressure in the evaporator when there is frost at the evaporator; monitoring said pressure during defrost of the evaporator; and triggering termination of the defrost action when the pressure starts to increase substantially.

Measuring the pressure of the refrigerant as opposed to the temperature allows determination of exactly when all the ice has been removed from the evaporator and switching back to a heating operation with little control overshoot, i.e. little wasted heat.

According to another aspect of the present invention there is provided a solar air source heat pump system comprising: a solar thermal system including tubing providing a heat transfer fluid circuit; and an air source heat pump system comprising tubing providing a refrigerant circuit, an evaporator where the refrigerant is evaporated, and valves for isolating refrigerant in the evaporator; wherein at least part of the tubing providing the heat transfer fluid circuit is located within the evaporator; the air source heat pump system further including valves to isolate the tubing providing the refrigerant in the evaporator while hot heat transfer fluid is passed through the part of the heat transfer fluid circuit located within the evaporator to effect defrosting of the evaporator.

At least part of the tubing providing the heat transfer fluid circuit is located within the evaporator, so that hot heat transfer fluid in the tubing for a heat transfer fluid circuit may pass through the evaporator to defrost the evaporator when needed.

This is possible because the system brings tubing providing the heat transfer fluid circuit and part of tubing providing the refrigerant circuit close to each other, for example connected by heat exchanger fins, enabling them to transfer thermal energy from one to another easily and efficiently.

Preferably, a substantial part of the tubing providing the refrigerant circuit located within the evaporator and a substantial part of the tubing providing the heat transfer fluid circuit located within the evaporator are substantially evenly distributed. Thus, the relevant parts of both sets of tubing are able to interact with the whole of the evaporator efficiently when they are required to operate.

A substantial part of the tubing providing the heat transfer fluid circuit located within the evaporator may run transversely of the tubing providing the refrigerant circuit located within the evaporator. This allows the system to perform an effective method for defrosting the evaporator by pumping hot heat transfer fluid in the tubing providing the heat transfer fluid circuit through the evaporator.

A substantial part of the tubing providing the heat transfer fluid circuit located within the evaporator may run substantially perpendicularly across the tubing providing the refrigerant circuit located within the evaporator. This ensures more effective method for defrosting the evaporator because heat transfer between the tubing providing the heat transfer fluid circuit and tubing providing the refrigerant circuit within the evaporator would be more efficient. Within the evaporator, the heat transfer fluid circuit and part of tubing providing the refrigerant circuit may be connected by heat exchanger fins.

The system may include means for determining the effectiveness of the evaporator based on the temperature difference between ambient air and the refrigerant temperature in the evaporator.

The system may include means for generating an alarm if the effectiveness of the evaporator is lower than a pre-set threshold at an ambient temperature at which frost is not possible, or if the effectiveness of the evaporator is lower than expected immediately after a defrost action is completed.

For a better understanding of the present invention and to show more clearly how it may be carried into effect reference will now be made, by way of example, to the accompanying drawings in which:

Figure 1 shows a typical solar thermal system in accordance with the prior art;

Figure 2 shows a typical ASHP system in accordance with the prior art;

Figure 3 is a schematic diagram of part of a solar thermal collector for use in the present invention;

Figure 4 is a simple schematic diagram showing an arrangement of tubing for a heat transfer fluid circuit and tubing for a refrigerant circuit within a solar thermal collector for use in the present invention;

Figure 5 shows a solar air source heat pump system for use in the present invention;

Figures 6a and 6b are graphs demonstrating a method for providing a defrost check in the system;

Figure 7 shows an alternative ASHP system for use in the present invention; and

Figure 8 shows an alternative solar air source heat pump system for use in the present invention.

In the following discussion, examples of defrosting methods for an evaporator of an ASHP system will be explained in accordance with embodiments of the present invention, together with examples of defrosting methods for an evaporator of a solar air source heat pump system which comprises an ASHP system and a solar thermal system, as well as systems suitable for performing such defrost methods. Examples of methods for initiating a defrost action, for performing the defrost action, and for terminating the defrost action will be discussed separately, but it is to be understood that according to the present invention, the three methods can be implemented separately or together in the same system. Furthermore, the present invention is discussed in the context of domestic hot water and space heating provision, but it is to be understood that the present invention is also applicable to other types of structures such as industrial buildings.

Figure 3 shows the structure of a solar thermal collector integrated with refrigerant tubing of a heat pump in accordance with an embodiment of the present invention.

The solar thermal collector 13 of this embodiment may be a flat plate collector. It may comprise an absorber sheet 14 for absorbing solar energy, a transparent cover 15 such as a glass cover which allows solar energy to pass through but reduces heat losses, an HTF to remove heat from the absorber through tubing forming part of an HTF circuit 16, a heat insulating backing 17 and a frame 42.

The absorber sheet 14 may be made of thermally stable polymers, aluminium, steel or copper, to which a matte black or selective coating is applied. In a preferred embodiment, the absorber sheet 14 comprises a continuous absorber sheet, enabling heat transfer over the whole collector area. Both refrigerant and water/glycol can use the whole collector area at different times.

In one embodiment, the HTF may be provided by water. In a preferred embodiment, glycol or any other suitable antifreeze may be added to the water to prevent freezing.

The solar thermal collector 13 of the present invention also comprises at least part of the tubing for a refrigerant circuit 18. In one embodiment of the present invention, the tubing for a refrigerant circuit 18 in the solar thermal collector 13 acts as a secondary evaporator for the ASHP.

Alternatively, Figure 3 may be interpreted as an evaporator 13 of an ASHP system comprising at least part of tubing for an HTF circuit 16 of a solar thermal system. Locating the HTF tubing 16 within the evaporator may be advantageous because, in such systems, hot HTF in the HTF tubing 16 may be pumped through the evaporator 13 to defrost the evaporator 13 when needed.

In this embodiment of the present invention, the outer appearance and handling of the collector 13 remains similar to the currently available solar thermal collectors. Consequently, currently available standard parts can be used in implementing the present invention. Furthermore, similar hydronics also means that standard parts can be easily mounted in the structure of the present invention.

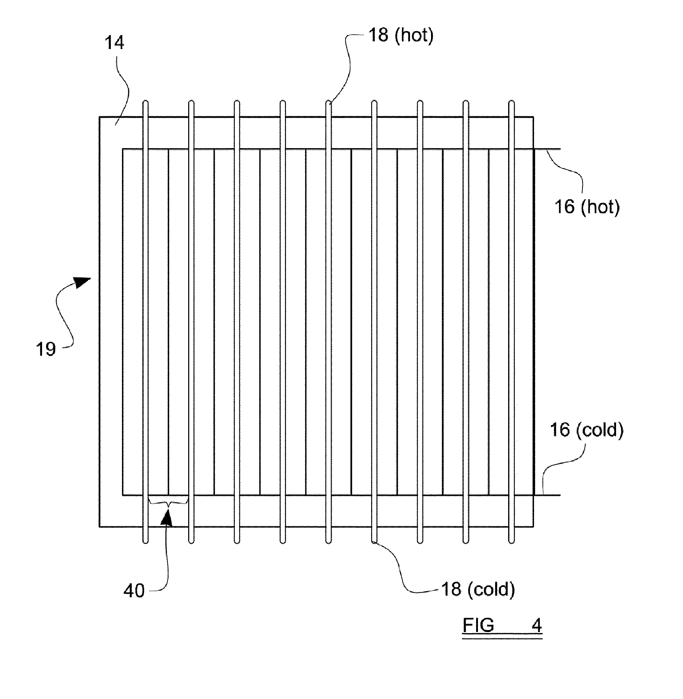

Figure 4 shows more clearly the tubing for an HTF circuit 16 and the tubing for a refrigerant circuit 18 over the collector area 19 in accordance with an embodiment of the present invention.

As shown in Figure 4, the collector comprises a continuous absorber sheet14, enabling heat transfer over the whole of the collector area 19 together with refrigerant tubing arrays 18 and water/glycol tubing arrays 16.

In a preferred embodiment, both refrigerant tubing arrays 18 and water/glycol tubing arrays 16 are evenly distributed throughout the absorber assembly. Thus each tubing 16 or 18 is able to interact with the whole of the solar collector 13 efficiently when required to operate.

The provision of refrigerant tubing 18 in a solar collector 13 facilities the combination of a solar thermal system and an air source heat pump system and allows the refrigerant to collect solar energy as well as heat energy. This helps the system to boost the coefficient of the power of the ASHP.

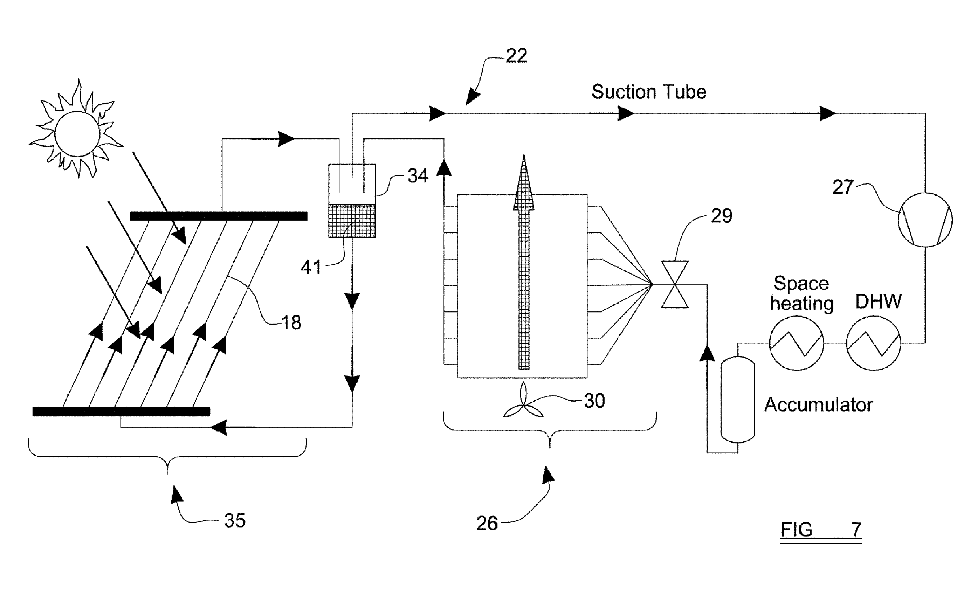

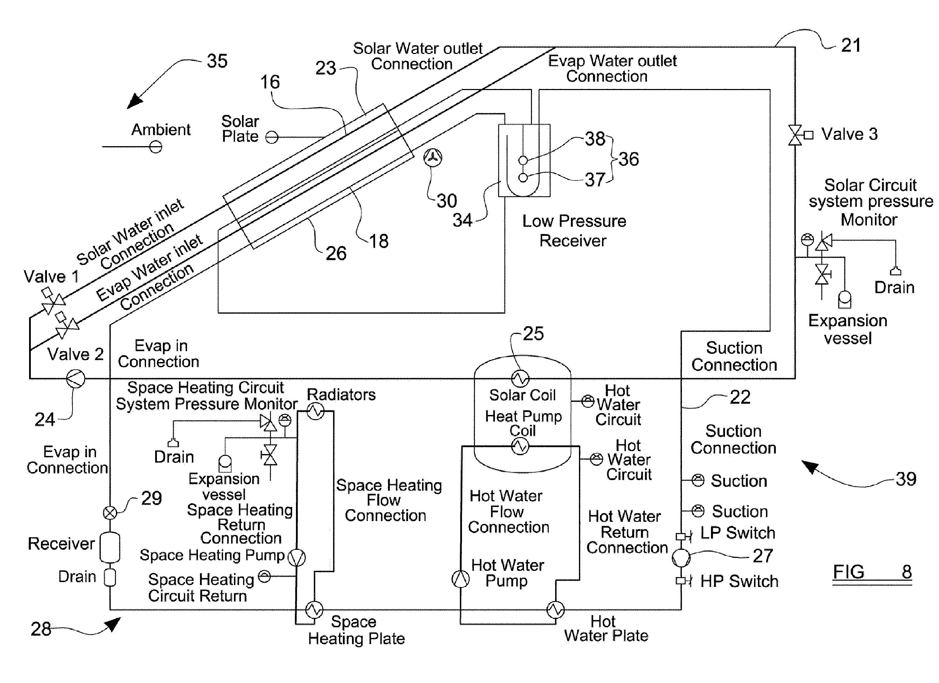

Furthermore, the provision of refrigerant tubing 18 in a solar collector 13 ensures that the refrigerant is best placed to absorb heat from warm air heated up by the sun in a location which has been chosen to maximise the amount of radiation received. In particular, the inclusion of refrigerant tubing 18 in the solar collector 13 permits utilisation of radiant heat energy in the ASHP operating mode for example for SH, as explained hereinafter in relation to Figures 7 and 8. This may happen when there is SH demand and the levels of solar radiation are insufficient to bring the solar collector water temperature up to a temperature higher than the stored water or when the solar collected water temperature has reached its set point.

In an alternative interpretation, part of the tubing for an HTF circuit 16 and part of the tubing for a refrigerant circuit 18 are both located with the evaporator 13 of an ASHP system. This interpretation is possible because in some embodiments of the present invention, where an ASHP system and a solar thermal system are combined into one system, the evaporator 26 of the ASHP is also the solar thermal collector 13 or 23 of the solar thermal system.

Locating part of the tubing for an HTF circuit 16 and part of the tubing for a refrigerant circuit 18 both in the evaporator13 is advantageous also because, in such systems, hot HTF in the HTF tubing 16 may be pumped through the evaporator 13 to defrost the evaporator 13 when needed. This is possible because the system brings tubing for an HTF circuit 16 and part of the tubing for a refrigerant circuit 18 close to each other, for example connected by heat exchanger fins, enabling them to transfer thermal energy from one to another easily and efficiently.

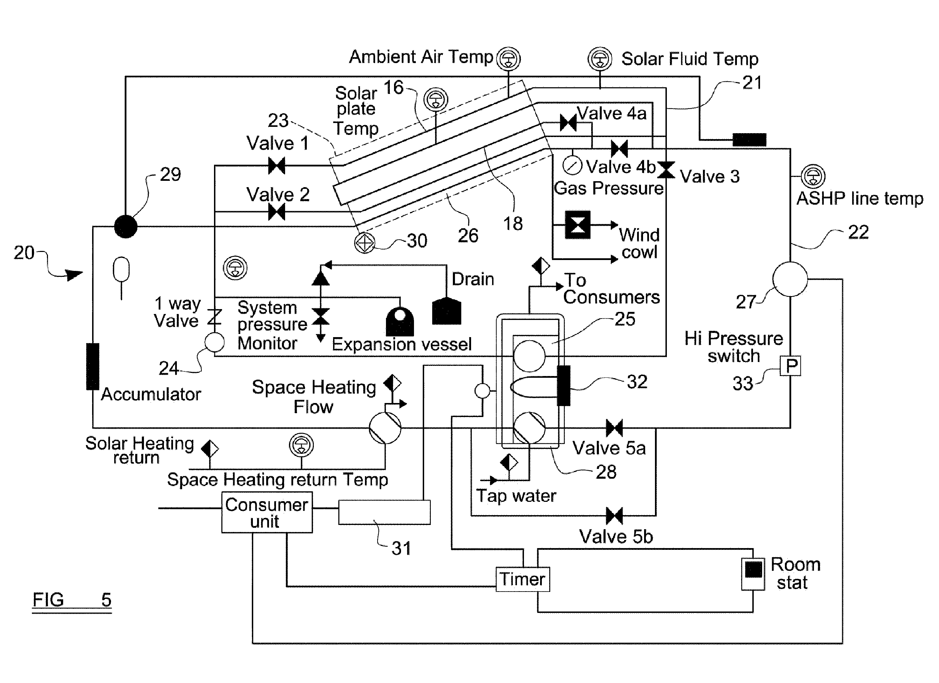

Figure 5 shows a solar air source heat pump system 20 which is a combined system of a solar thermal system 21 and an air source heat pump system 22 in accordance with a first configuration of the present invention.

Any standard solar thermal system and any standard air source heat pump system may be used for this combination. In a similar manner to standard solar thermal systems, the solar thermal system 21 of the combined system 20 comprises a solar collector 23, a circulating pump 24, and a storage tank 25. In a similar manner to standard ASHP systems, the ASHP system 22 of the combined system 20 comprises of an air source evaporator 26, a compressor 27, a condenser 28, a (thermal) expansion device 29 (such as a valve, for example a throttle valve), and a fan 30.

As can be seen from Figure 5, in this embodiment of the present invention, the air source evaporator 26 is located close to the solar collector 23. In a preferred embodiment as shown in Figures 3 and 4, the air source evaporator 26 is located within the solar collector 23, so that it is best placed for the refrigerant to absorb heat from warm air heated up by the sun in a location which has been chosen to maximise the amount of radiation received.

The controller 31 of the system 20 controls both the solar thermal system 21 and the ASHP system 22. Furthermore, the condenser 28 of the ASHP system 22 is provided in the storage tank 25 of the solar thermal system 21, possibly within the storage tank 25 of the solar thermal system 21. These features contribute to simplifying the combined system, reducing costs, and further integrating the solar thermal system and the ASHP system of the present invention, thereby resulting in a combined system which is more than the separate systems which it combines.

The system 20 may operate in five different modes under control of the controller 31, which are "Off/System Fault Mode", "Solar Only Mode", "Solar and ASHP Mode", "ASHP Only Mode" and "ASHP Defrost Mode". Entry and exit from the different modes may be decided by the system controller 18.

In addition to selecting the correct mode of operation, the controller 31 may evaluate whether there is sufficient energy input to meet the heating and hot water demands. If more energy is being used than being replaced, then an auxiliary heating source 32, such as an immersion heater, may be enabled to allow the system to cope with demand. In one embodiment, if the ambient temperature outside is less than a defined set point, the auxiliary heating source 32 can be turned on if there is a demand for SH.

The Off / System Fault Mode may be entered when the system 20 is turned off or a fault has occurred. The mode is designed to prevent damage over the full range of environmental conditions expected for the system. In one configuration of this mode, the compressor 27, the pump 24 and the fans 30 are all turned off. Furthermore, valves 1, 2, 5a, 5b are open, (thermal) expansion device 29 is operating, and valve 3 is closed.

The Solar Only Mode may be entered when the storage tank 25 temperature is less than the solar collector 23 temperature and also less than a predetermined first threshold (which may be variable if desired). This allows the system 20 to store energy when it is readily available from the solar collector 23 regardless of whether there is heating or hot water demand at the time. This mode uses the least amount of electrical power as only a water pump 24 is energised.

In one configuration of this mode, the compressor 27 and the fans 30 are turned off and the pump 24 is turned on. Furthermore, valves 1, 3, 4a, 4b, 5a, 5b are open, (thermal) expansion device 29 is operating, and valve 2 is closed.

When the storage tank 25 temperature reaches the solar collector 23 temperature or an upper limit of the predetermined first threshold, the system 20 may exit the Solar Only Mode. The upper limit of the predetermined first threshold may be set, for example, at 95 °C.

In the Solar and ASHP Mode, the refrigerant is passed through the solar collector 23 to gain additional heat when, for example, there is timed demand for heating or hot water. The system 20 may enter the Solar and ASHP Mode, when the solar collector 23 temperature is greater than the ambient temperature plus a predetermined second threshold (which may be varied). The predetermined second threshold may be set, for example, at 15 °C. This mode uses available solar energy to boost the coefficient of power of the ASHP.

In one configuration of this mode, the compressor 27 is turned on, the pump 24 is off and the fans 30 are under speed control. Furthermore, valves 1, 2, 3 and 4b are closed, valve 4a is open, (thermal) expansion device 29 is operating, and the three way valve bypass 5a and 5b may be closed or open depending on heating conditions.

The system 20 may exit the Solar and ASHP Mode when there is no demand for heating or hot water, or when the heat generated is less than the temperature of the water in the storage tank 25. For example, the system may exit this mode when the solar collector 23 temperature is no longer greater than the ambient temperature plus a predetermined third threshold (which may be variable). The predetermined third threshold may be set, for example, at 2°C.

When there is demand for heating or hot water and the solar collector 23 temperature is no greater than the ambient temperature, the system may enter the ASHP Only Mode. In one configuration of this mode, the compressor 27 and the fans 30 are turned on and the pump 24 is off. Furthermore, valves 1, 2, 3 and 4a are closed, valve 4b is open, the three way valve bypass 5a and 5b may be closed or open depending on heating conditions, and (thermal) expansion device 29 is operating as normal.

The system 20 may exit the ASHP Only Mode when there is no more demand for heating or hot water, or when the high pressure switch 33 is activated, or when the solar collector 23 temperature is no greater than the ambient temperature less a predetermined fourth threshold (which may be variable).

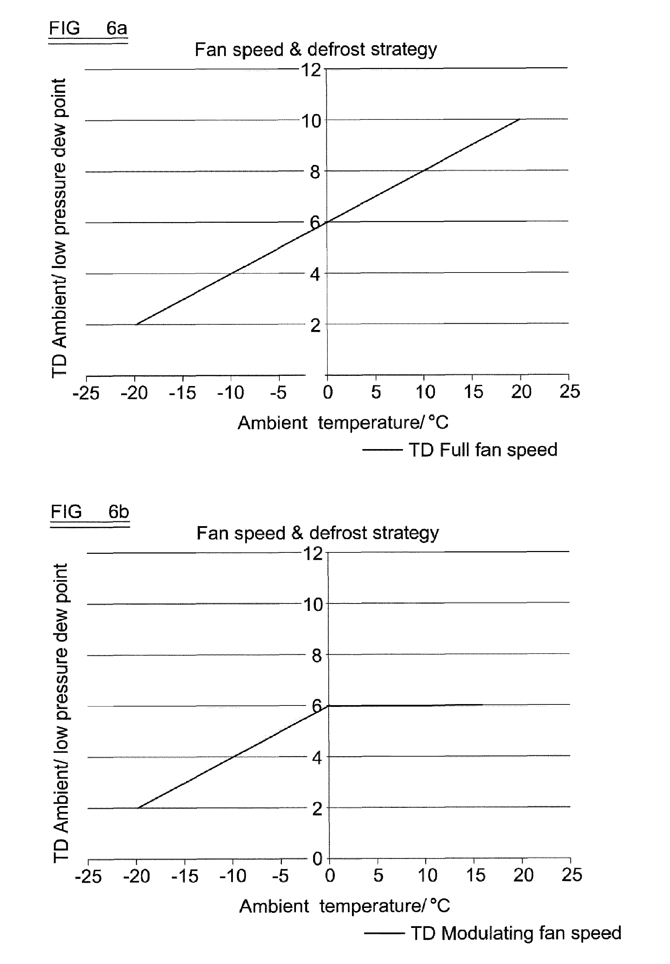

The system 20 may provide for a defrost check. As shown in Figures 6a and 6b, TD ambient/low pressure dew point at TD modulating fan speed may indicate frost conditions. To defrost, the system 20 may enter the ASHP Defrost Mode. In one configuration of this mode, the compressor 27 and the fans 30 are turned off and the pump 24 is on. Furthermore, valves 1, 4a, 4b are closed, (thermal) expansion device 29 is not operating, and valves 2, 3, 5a, and 5b are open.

The combination of these two systems 21 and 22 means they both can contribute energy to the thermal storage in the storage tank 25.

Additionally, the ASHP system 22 in the present invention can absorb heat from warm air in the solar collector 23, leading to improved performance when the weather is cold but sunny, or when the weather is warm but not sunny such as cloudy or raining. When the weather is cold but sunny, the solar thermal system 21 of the present invention would work better, whereas when the weather is warm but not sunny, the ASHP system 22 of the present invention would work better. In such conditions, the overall amount of renewable energy is higher using the combined system 20 of the present invention, leading to higher efficiency.

Figure 7 shows an alternative ASHP system 22 configuration in accordance with the present invention, and Figure 8 shows an alternative solar air source heat pump system 39 configuration of the present invention incorporating the alternative ASHP system 22 shown in Figure 7. In this alternative configuration shown in Figures 7 and 8, valves 4a and 4b in the configuration of Figure 5 have been replaced by a low pressure receiver 34. In this configuration, the ASHP system 22 is provided with a solar evaporator 35 in addition to an air source evaporator 26.

In this configuration, the design of the system 39 is such that a liquid level sensor 36 within the low pressure receiver 34 controls the superheat settings of expansion device 29, such as an electronic expansion valve. In a preferred embodiment, the liquid level sensor 36 comprises two level switches: a low liquid level switch 37 and a high level switch 38.

This ensures that there is always liquid refrigerant 37 within the solar evaporator.

When solar radiation energy is available the refrigerant will evaporate naturally in the heat and create a thermo-siphon effect. This will start to lower the level of refrigerant within solar evaporator 35, which will in turn trigger the low liquid level switch 37 within the low pressure receiver 34. This will effectively open the expansion device 29, allowing a little more refrigerant through and effectively improving the efficiency of the system.

When the amount of solar radiation energy reduces, the reverse occurs. The system 39 uses a low pressure receiver 34 as a reservoir of refrigerant to ensure a thermo-cycle can take place in the circuit. This simple but elegant control method ensures that the solar heat is utilised completely automatically and there is no need for extra refrigerant valves, sensors, pumps or complex software algorithms.

The provision of the evaporator 35 within the solar collector 23, together with the provision of a low pressure receiver 34, creates a secondary solar evaporator 35 for the ASHP system 22 of the present invention, and thus allows the refrigerant to collect solar energy from the sun and transfer into another medium such as water/glycol. The system 39 uses solar energy to drive the evaporator 35 and 26 and condensing cycle to transfer heat energy which helps to boost the coefficient of power of the ASHP.

Furthermore, the addition of the solar evaporator 35 has no negative effect on efficiency when running without solar assistance because the solar evaporator 35 operates in parallel with the system and is completely bypassed in this mode.

In a similar manner to the configuration shown in Figure 5, the system 39 may also operate in the same five different modes, which are "Off/System Fault Mode", "Solar Only Mode", "Solar and ASHP Mode", "ASHP Only Mode" and "ASHP Defrost Mode".

In particular, the system may enter the Solar Only Mode, if there is a demand for heat and sun is available. In a similar manner to a standard solar thermal collector, in this mode the solar collector 23 absorbs heat and the heat is carried to the thermal storage 25 by water/glycol. In the Solar and ASHP Mode, the refrigerant is used to collect energy from the sun and transfer into another medium such as water/glycol. The refrigerant is partly evaporated in ASHP-circuit, thus contributing to the SH-loop. That is, the liquid refrigerant that has passed through the DHW and space heating coils and the accumulator, is expanded through the expansion device 29, and then enters the air source evaporator 26, exits as a liquid, a gas, or a mixture of liquid and gas, and passes to the low pressure receiver 34. When solar energy is available, liquid from the receiver 34 passes to the bottom of the solar evaporator 35 where it is evaporated, the gas returning to the receiver 34. Gas is drawn out of the top of the receiver 34 by suction and passes to the compressor 27, where it is converted to a high pressure, high temperature gas, and thereafter to the DHW and space heating coils and the accumulator as mentioned above.

According to some embodiments of the present invention, the tubing for HTF circuit 16 is closely located to the tubing for refrigerant circuit 18 around the solar thermal collector 13 region. In embodiments shown in Figures 3 and 4, both sets of tubing 16 and 18 are located with the solar thermal collector 13. By incorporating tubing for an HTF circuit16 into the evaporator 26 of the air source heat pump 22, it is possible to use the HTF, such as water, heated very efficiently by the solar collector 23 or heat pump 22, to defrost the heat pump evaporator 26.

The present invention provides an energy efficient method for defrosting the evaporator 26 of an ASHP system, comprising a first method for initiating defrost action, a second method for defrosting using tubing for an HTF circuit 16 within the evaporator 26, and a third method for determining the termination of defrost action. The first method and the third method may be used in any standard or improved ASHP system, regardless of whether a solar thermal system is also present in the system. The second method may be used in a combined system of an ASHP system and a solar thermal system, because it relies on at least part of tubing for an HTF circuit of a solar thermal system being located within the evaporator of an ASHP system. These systems may be used together or separately.

In accordance with an embodiment of the present invention, there is provided a method for energy efficient removal of frost from the evaporator coil 18 after relevant algorithm has initiated the defrost cycle. The compressor 27 may be switched off, and valves may be closed to isolate the evaporator coil 18, so that the refrigerant will equalise its pressure throughout the evaporator coil 18. The water pump 24 may be switched on so that it can pass hot water through the water/glycol stream within the evaporator coil 18 to melt the ice provided the water is above a predetermined temperature, such as 30°C; if not the ASHP will switch on until the water reaches a predetermined temperature, such as 30°C.

The refrigerant will migrate to the lowest pressure area ensuring that the whole coil 18 remains the same temperature with no hot or cold spots.

By sensing the refrigerant, it may then be easily determined when the ice has been cleared, i.e. when the coil 18 is above 0°C. When the coil is above 0°C, the pump 24 may be turned off to stop hot water and the compressor 27 may be turned on.

This method of defrosting, using tubing for an HFT circuit 16 is around 200% more efficient than the established methods of defrosting using hot gas by-pass or reverse cycle defrost techniques.

The advantages of this method over traditional methods of defrosting by hot gas by pass or reverse cycle is that typically hot gas bypass uses 1 kW of electricity to produce 1 kW of heat to the evaporator coil, and reverse cycle typically uses 1 kW of electricity to produce 2kW of heat, whereas the proposed method of the present invention given same conditions uses 1 kW to produce approximately 4kW of heat to the evaporator coil. Accordingly, the method of the present invention uses less energy and thus is more efficient. Furthermore, potentially if heated by water heated by the solar thermal coil the heat required to defrost the evaporator coil could be purely the consumption of the water circulating pump.

The improvement is enhanced due to improved controllability when compared to the established methods. The control of the defrost process using hot water supplied through the water tubing arrays 16 is much easier, suffering very little overshoot. In addition, the thermal energy within the HTF is derived from solar energy, or is derived from only one vapour compression cycle.

To further reduce the energy required for the defrost function, a control mechanism has been devised using control algorithms to initiate the defrost mode, based on ambient and refrigerant temperatures.

This is achieved with the use of a pre-programmed "mask" of expected pressures within the system for given ambient temperatures which provides for a better interpretation of the state of the evaporator coil 18, thus allowing for more precise settings of the defrost switching parameters.

The effectiveness of an evaporator heat exchanger can be measured by the temperature difference between that of the air that crosses the heat exchanger and that of the refrigerant evaporation temperature.

As the temperature of the air that crosses the heat exchanger increases, the amount of duty produced by the evaporator also increases but the effectiveness of the evaporator 26 reduces because the temperature difference increases.

The effectiveness of the evaporator 26 with no frost can be logged across a range of ambient temperatures and entered into a control algorithm.

When frost/ice occurs, the effectiveness of the evaporator 26 reduces, resulting in the temperature difference between the air and the refrigerant increasing. Measurement of this temperature difference, and the setting of a threshold, can be used to trigger a defrost routine.

This system ensures that a defrost routine is only triggered when required. Many current defrost systems use a set temperature to trigger a defrost routine and then set a fixed period before the next defrost can start. However, this results in defrosts occurring when there is no need, i.e. low humidity situations and the like. Only through the measurement of the effectiveness of the evaporator can any system truly know whether defrosting is required.

It is also possible through the measurement of the effectiveness of the evaporator to detect whether there is a blockage to the airflow through a collection of debris.

If the effectiveness of the evaporator is reduced at a higher ambient temperature than frost is expected to occur, or the effectiveness is lower than expected immediately after a defrost routine, then this indicates there is a blockage to air flow for which it is appropriate to create an alarm sequence.

Furthermore, the present invention provides an effective method of determining the termination of the defrost cycle, which is achieved through measurement of the refrigerant pressure.

The refrigerant pressure is suppressed whilst there is any ice on any part of the evaporator coil 18. This is due to the refrigerant pressure being determined by the coldest point in the system.

The refrigerant pressure determines an equivalent temperature at which it evaporates. When a pressure rise occurs indicating that the temperature of the refrigerant is above zero, it is certain that all the ice on the evaporator has melted. As soon as all the ice has taken all the energy it needs to melt, the pressure will begin to rapidly rise.

Measuring the pressure of the refrigerant as opposed to the temperature allows precise determination of when all the ice has been removed from the evaporator and allows switching back to a heating operation with little control overshoot, i.e. little wasted heat.

This method of determining the termination of the defrost cycle may be used together with the method of defrosting using tubing for an HFT circuit and / or the method of initiating defrost as discussed above. All three methods may be used separately and independently of the other two methods. Alternatively, any two methods or the all methods may be used together in the same system.

## Claims

1. A method for defrosting an evaporator of a solar air source heat pump system comprising: a solar thermal system (21) including tubing providing a heat transfer fluid circuit (16); and an air source heat pump system (22) comprising tubing providing a refrigerant circuit (18), an evaporator (26) where the refrigerant is evaporated, and valves (4a, 4b) for isolating refrigerant in the evaporator; wherein at least part of the tubing providing the heat transfer fluid circuit (16) is located within the evaporator (26), the method comprising the steps of: closing the valves (4a, 4b) to isolate the tubing providing the refrigerant circuit (18) in the evaporator (26); and passing hot heat transfer fluid through the part of the tubing providing the heat transfer fluid circuit (16) located within the evaporator (26) to melt frost in the evaporator.

2. A method according to claim 1 and including the steps of: measuring the effectiveness of the evaporator (26); determining whether the effectiveness of the evaporator is lower than a pre-set threshold at the ambient temperature; and triggering a defrost action if the effectiveness of the evaporator is lower than the pre-set threshold.

3. A method according to claim 1 or 2 and including detecting for a blockage of air flow through the evaporator (26), the method comprising the additional steps of: determining whether the effectiveness of the evaporator is lower than a pre-set threshold at an ambient temperature at which frost is not possible, or whether the effectiveness of the evaporator is lower than expected immediately after a defrost action is completed; and transmitting a signal indicating blockage to air flow in the evaporator if the effectiveness of the evaporator is lower than the pre-set threshold at the ambient temperature, or if the effectiveness of the evaporator is lower than expected immediately after a defrost action is completed.

4. A method according to claim 2 or 3, wherein the step of measuring the effectiveness of the evaporator (26) comprises the steps of: measuring ambient temperature around the evaporator; measuring refrigerant temperature in the evaporator; calculating the temperature difference between the ambient temperature and the refrigerant temperature in the evaporator; and calculating the effectiveness of the evaporator using the temperature difference.

5. A method according to claim 2, 3 or 4, further comprising the step of determining a threshold for the effectiveness of the evaporator (26) at different ambient temperatures.

6. A method according to claim 5, wherein the step of determining a threshold for the effectiveness of the evaporator (26) at different ambient temperatures comprises the steps of: measuring the effectiveness of the evaporator at different ambient temperatures around the evaporator when there is no frost at the evaporator; and setting a threshold for the effectiveness of the evaporator indicating no frost at different ambient temperatures.

7. A method according to any preceding claim and including the steps of:
measuring the refrigerant pressure in the evaporator (26) when there is frost at the evaporator; monitoring said pressure during defrost of the evaporator; and
triggering termination of the defrost action when the pressure starts to increase substantially.

8. A solar air source heat pump system comprising: a solar thermal system (21) including tubing providing a heat transfer fluid circuit (16); and an air source heat pump system (22) comprising tubing providing a refrigerant circuit (18), an evaporator (26) where the refrigerant is evaporated, and valves (4a, 4b) for isolating refrigerant in the evaporator; wherein at least part of the tubing providing the heat transfer fluid circuit (16) is located within the evaporator (26); the air source heat pump system (22) further including valves (4a, 4b) to isolate the tubing providing the refrigerant (18) in the evaporator (26) while hot heat transfer fluid is passed through the part of the heat transfer fluid circuit (16) located within the evaporator (26) to effect defrosting of the evaporator.

9. A system as claimed in claim 8, wherein within the evaporator (26) the heat transfer fluid circuit (16) and part of tubing providing the refrigerant circuit (18) are connected by heat exchanger fins.

10. A system as claimed in claim 8 or 9, wherein a substantial part of the tubing providing the refrigerant circuit (18) located within the evaporator (26) and a substantial part of the tubing providing the heat transfer fluid circuit (16) located within the evaporator are substantially evenly distributed within the evaporator.

11. A system as claimed in claim 8, 9 or 10, wherein a substantial part of the tubing providing the heat transfer fluid circuit (16) located within the evaporator (26) runs transversely of the tubing providing the refrigerant circuit (18) located within the evaporator.

12. A system as claimed in claim 11, wherein a substantial part of the tubing providing the heat transfer fluid circuit (16) located within the evaporator (26) runs substantially perpendicularly across the tubing providing the refrigerant circuit (18) located within the evaporator (26).

13. A system as claimed in any one of claims 8 to 12 and including means for determining the effectiveness of the evaporator (26) based on the temperature difference between ambient air and the refrigerant temperature in the evaporator.

14. A system as claimed in any one of claims 8 to 13 and including means for generating an alarm if the effectiveness of the evaporator (26) is lower than a pre-set threshold at an ambient temperature at which frost is not possible, or if the effectiveness of the evaporator is lower than expected immediately after a defrost action is completed.
